# EUROPEAN PATENT SPECIFICATION

(11) **EP 0 367 812 B1**
(45) Date of publication and mention of the grant of the patent: **01.03.1995**
(21) Application number: 89904663.5
(22) Date of filing: 29.03.1989
(51) Int. Cl.: C08K 5/00, C08L 75/04, C08F 2/16

(54) **PROCESS FOR PREPARING WATER-DISPERSABLE POLYURETHANE/ACRYLIC POLYMER COMPOSITIONS**
VERFAHREN ZUR HERSTELLUNG VON IN WASSER DISPERGIERBAREN POLYMETHAN/AKRYLPOLYMER-ZUSAMMENSETZUNGEN
PROCEDE POUR LA PREPARATION DE COMPOSITIONS A BASE D'UN POLYURETHANE DISPERSIBLE DANS L'EAU ET D'UN POLYMERE ACRYLIQUE

(30) Priority: 18.04.1988 US 183011
(43) Date of publication of application: 16.05.1990
(73) Proprietor: S.C. JOHNSON & SON, INC., Racine, Wisconsin 53403-5011 (US)
(72) Inventor: CARLSEN, Russell O., Racine, WI 53403 (US); KAWA, John, Racine, WI 53406 (US); KRAWCZAK, Dawn T., Racine, WI 53406 (US); LEE, Hung-Hee, Racine, WI 53402 (US); PIETTE, Stephen C., Racine, WI 53402 (US)
(74) Representative: Madgwick, Paul Roland
(86) International application number: US8901299
(87) International publication number: WO8910380

(56) References cited:
- US-A- 4 317 895
- US-A- 4 318 833
- US-A- 4 820 762
- Encyclopedia of Polymer Science and Technology, Wiley and Sons, 1985, volume 1, pages 271-2, Mark et al.

## Description

This invention relates to polyurethane/acrylic polymer aqueous dispersions which, when applied as a coating, will air dry to a hard, abrasion-resistant film having excellent toughness, durability, and gloss. More particularly, the invention relates to aqueous polymer dispersions characterized by an acrylic polymer formed by polymerizing acrylic and styrene type monomers in the presence of a water-dispersible polyurethane and a vinyl support resin. "Acrylic" as used herein to define a monomer or polymer embraces acrylic acid and methacrylic acid, and derivatives thereof such as the esters.

Polyurethanes are well known in, inter alia, the protective coating industry to be materials having exceptional hardness, abrasion resistance, toughness, flexibility, and, when aliphatic in nature, UV stability. These materials have been extensively developed in order to build into the polyurethane specific properties so that the polyurethane can be used in specialized areas.

One area of development has been the modification of the polyurethanes with components having ethylenic unsaturation. Thus,
- Guagliardo et al, U.S.-A- 4,317,895; and Guagliardo, U.S.-A- 4,318,833 disclose coating compositions based on a thermoplastic copolymer prepared by polymerizing one or more ethylenically unsaturated monomers in the presence of a fully reacted polyurethane. The resulting copolymers are stated to be particularly useful in automotive finishes.
- Tideswell et al, U.S.-A- 4,107,229 discloses vinyl terminated, fully reacted urethane compositions comprising the reaction product of a polyisocyanate, an hydroxyalkylated novolac, and an ethylenically unsaturated alcohol. The vinyl terminated compositions are then copolymerized with ethylenically unsaturated monomers to produce thermoset polymers useful in the manufacture of molded articles, laminates, and in the formulation of marine coatings.
- Suling et al, U.S.-A- 4,233,424; and Suling et al, U.S.-A- 4,300,886 disclose polymers useful in making dental appliances obtained by bead polymerization of from about 88 to 99.5% by weight of a polymer of methacrylic acid esters, with from 0.5 to 12% by weight of a polyurethane.
- Niederhauser et al, U.S.-A- 3,641,199 discloses urethane elastomer impact modifiers wherein ethylenically unsaturated monomers are polymerized in the presence of a polyurethane. The modified polymers are stated to offer an improved balance of physical properties, including impact strength, clarity, and weather resistance.
- Other patents disclosing polyurethanes modified with acrylic resins include Suzuki et al, U.S.-A- 4,038,257; Kondo et al, U.S.-A- 3,773,857; Olstowski, U.S.-A- 4,125,487; Gould et al, U.S.-A- 4,490,423; Stevenson, U.S.-A- 4,035,439; and Gould et al, U.S.-A- 4,454,309.

Although the prior art establishes that the polyurethanes have been extensively modified with the acrylics, in most all instances the modifications have been for the purpose of providing polyurethane compositions having specific properties for a particular application. There is still a need for modified polyurethanes dispersed in or dispersible in water which, while retaining the advantageous properties of the polyurethanes, will also have the beneficial characteristics of resin systems such as the acrylics. Moreover, it is particularly desirable to have the ability to modify the polyurethanes in a manner which will permit the obtaining of a variation in the physical characteristics of the polymeric compositions, such as the ability to prepare the compositions to have either low, high, or intermediate glass transition temperatures (Tg), and a balancing of flexibility, durability, hardness, toughness, and gloss in coatings prepared from the polymer compositions without need for the addition of large amounts of modifying components.

Accordingly, it is a primary object of the present invention to provide for polyurethane/acrylic polymer aqueous dispersions which can be tailored in composition to provide coatings based on the dispersions with varying physical characteristics, which may vary widely to satisfy widely varying applications.

In addition, the polyurethane/acrylic polymer aqueous dispersions are tailored to have balanced properties in coatings prepared from the dispersions with respect to abrasion and detergent resistance, depth and retention of gloss, and recoatability which causes the aqueous dispersions to be particularly suitable for use in floor care compositions.

Specifically, a process for preparing an aqueous floor polish characterized by polymerizing acrylic monomers selected from acrylic acid; methacrylic acid; esters of acrylic acid or methacrylic acid, said esters being selected from methyl, ethyl, n-propyl, n-butyl, iso propyl, iso butyl, n-amyl, n-hexyl, iso amyl, sec-butyl, tert butyl, 2-ethyl butyl, cyclohexyl, cyclopentyl, n-octyl, 2-ethyl hexyl, 2-hydroxy ethyl, and 6-hydroxy hexyl; 2-hydroxy-butyl acrylate; 2-hydroxy propyl methacrylate 5,6-dihydroxyhexyl methacrylate; styrene; alpha methyl styrene; or mixtures thereof to form an in situ polymer in the presence of a water dispersible polyurethane present in the amount of 10 to 65% by weight and a preformed acrylic support resin having an acid number of from 50 to 260 present in an amount of from 5 to 25% by weight, said in situ polymer having a Tg value between -40 and 135°C if produced in the absence of said support resin and water dispersible polyurethane, to produce an aqueous dispersion comprising 40-85% of water dispersible polymer, and thereafter optionally compounding said aqueous dispersion with:
(a) up to 10% by weight wax;
(b) up to 6% by weight surfactant;
(c) up to 2.5% by weight of a plasticizer;
(d) up to 2.5% by weight of a leveling agent; and
(e) a coalescing agent.

The components of the final aqueous dispersion will comprise from 3 to 85% by weight water-dispersible polyurethane, 5 to 40% by weight acrylic support resin, and 15 to 85% by weight of the acrylic polymer formed in situ by polymerizing the acrylic monomers. Preferably, the components of the final aqueous dispersion will comprise from 3 to 65% by weight polyurethane, 5 to 30% by weight acrylic support resin, and 25 to 92% by weight of the acrylic polymer formed in situ. More preferably, the final aqueous dispersion will comprise from 5 to 40% by weight polyurethane, 5 to 25% by weight acrylic support resin, and 35 to 90% by weight of the acrylic polymer formed in situ. Most preferably, the final aqueous dispersion will comprise from 10 to 25% by weight polyurethane, 8 to 15% by weight acrylic support resin, and 60 to 82% by weight acrylic polymer formed in situ.

By polymerizing the acrylic monomers in the presence of the polyurethane and support resin, it is possible to control the properties of the aqueous dispersion to obtain the favorable properties of the polyurethane such as UV stability (if aliphatic in nature), hardness, abrasion resistance, toughness, and resistance to salt and organic chemicals; and also in general the favorable properties of acrylic systems which can show excellent UV stability, good depth and retention of gloss, and recoatability. Moreover, it is possible by the judicious selection of the three components of the system to obtain a variety of properties includlng a glass transition temperature which varies from a high glass transition temperature to a low glass transition temperature to provide a hard resin or a soft resin; and to vary the properties of the dispersions to provide coatings based on the dispersions having a balancing of properties such as hardness, abrasion resistance, toughness, resistance to chemicals such as detergents, and depth and retention of gloss so as to permit the formation of compositions which can be used in such diverse applications as floor coatings, graphic arts inks, paint binders, plastics additives, pigment-dispersant, resins and adhesives, without need for the addition of large amounts of modifying components such as surfactants.

### The Water-Dispersible Polyurethanes Used According To The Invention

The water-dispersible polyurethanes which can be used in the compositions of the present invention are preferably the low molecular weight linear polyurethanes. These materials will generally have a number average molecular weight between 5,000 and 50,000, and preferably from 15,000 to 40,000. These polyurethanes generally comprise low molecular weight polyols reacted with polyisocyanates. A typical scheme for preparing aqueous urethane dispersions comprises the preparation of an isocyanate terminated prepolymer containing free acid groups. This is achieved by combining a polyether or polyester polyol with a diol acid such as dimethanol propionic acid (DMPA) with an excess of a diisocyanate. The acid groups of the ioscyanate prepolymer are then neutralized with a tertiary amine, dispersed in water and chain extended with a diamine.

The polyisocyanates used herein preferably are the linear diisocyanates such as 1,6-hexamethylene diisocyanate, 1,4-tetramethylene diisocyanate, 1,4-cyclohexylene diisocyanate, 1-methyl-2,4-diisocyanatocyclohexane, 1-isocyanato-3,3,5-trimethyl-5-isocyanatomethyl cyclohexane (isophorone diisocyanate, or IPDI), 2,4^{'}-diisocyanato-dicyclohexylmethane, 4,4'-diisocyanato-dicyclohexylmethane, and meta- and para-tetramethylxylenediisocyanate. In addition to the above diisocyanates, the urethane oligomers obtained by isocyanurate or diurethane formation can be employed. It is preferable to use isocyanates and polyisocyanates containing aliphatic and/or cycloaliphatic bound isocyanate groups in order to obtain good light stability. The polyol employed is generally a linear polyol of the type derived from polyalkylene ether glycols, polyester polyols including dihydroxy polyesters, dihydroxy polyester amides, polyester polycarbonate polyols, polyhydroxy polyacetals and polycarbonate polyols.

More preferably the water-dispersible polyurethanes will have anionic characteristics obtained, for example, by including acid groups which can be neutralized by base materials. However, any of the water-dispersible polyurethanes have application according to the present invention, including those prepared from the aromatic isocyanates such as 2,4-tolylene diisocyanate, m-phenylene diisocyanate, 4-chloro-1,3-phenylene diisocyanate, 4,4'-biphenylene diisocyanate and 1,5-naphthylene diisocyanate, with any polyol component which can be a polyester having reactive hydroxyl groups such as the alkyd resin polyesters of the type formed by the reaction between glycols, such as ethylene glycol, diethylene glycol, triethylene glycol, trimethylene glycol, neopentyl glycol, pentamethylene glycol, hexamethylene glycol and decamethylene glycol, with dibasic acids such as maleic, succinic, glutaric, adipic, phthalic, terephthalic, hexahydroterephthalic and para-phenylenediacetic acids. Other alkyd resins formed using glycerine or other polyhydroxy compounds with dibasic acids, as well as to esters of polyhydric alcohols and hydroxy fatty acids, such as glyceryl ricinoleate and castor oil can be used. The polyurethanes useful herein can also include modifiers such as amines.

As will be more fully apparent hereinafter, it is essential to select the components for the polyurethane in order that the polyurethane will have water-dispersible characteristics and which provides the specific characteristics for a tailored end application. Water-dispersible polyurethanes particularly useful herein are commercially available, for example the Spensol Series such as Spensol L-50, L-51, L-52, L-53, L-54, L-55, and L-56 marketed by N. L. Industries, Buffalo, New York. Other suitable, commercially available water-dispersible polyurethanes are marketed by Witco Chemical Corporation, New York, New York, under the tradename Witcobond W-232, W-234, W-240, and W-290H. Still other water-dispersible polyurethanes are commercially available from Mobay Chemical Corporation, Pittsburgh, Pennsylvania, under the tradename Baybond XW 121, Impranil DLH, and Impranil DLN; from Sanncor, Leominister, Massachusetts, under the tradename Sancure 895, 896, 899, 1815, 1817, and 815; from Hauthaway & Sons Company, Linn, Massachusetts, under the tradename Hauthane HD-2007; and from Polyvinyl Chemical, Inc., Wilmington, Massachusetts, under the tradename Neorez R-960, R-966, and R-940.

### The Acrylic Support Resin

The acrylic support resin is a fully formed acrylic addition polymer such as is disclosed in commonly assigned U.S.-A- 4,414,370; 4,529,787, and 4,546,160. More particularly,
- the '370 patent discloses styrene and acrylic acid copolymers made by bulk thermal initiation which have a low weight average molecular weight and having a relatively high number average molecular weight. The process produces resins having relatively high aromatic content, making the resins particularly suitable for use in high solids coatings.
- the '787 patent discloses aromatic/acrylate polymers manufactured in a bulk initiated process wherein the process utilizes a polymerization initiator in the presence of low solvent levels to produce polymers having a narrow molecular weight distribution and a low chromophore content. These polymers have a number average molecular weight of from 500 to 6000, a polydispersity of less than 2.5, and a dispersion index of less than 4.5. The polymers, because of their low chromophore content, are particularly useful in protective coatings of the type herein contemplated, including floor polishes.
- the '160 patent discloses a continuous bulk polymerization process for producing polymers having a number average molecular weight of 1000 to 2500, a polydispersity of less than 3, a dispersion index of up to 5, and a low chromophore content.

Whereas the aforesaid commonly assigned patents disclose polymers having particularly desirable characteristics for use as the support resin according to the present invention, other acrylic polymers can be used as the support resin according to this invention. For example, resins made by a solution process are suitable for use herein. Vasanth R. Kamath and James D. Sargent, Sr., Pennwalt Corporation, in a paper entitled "High Solids Acrylic Coatings: Resin Synthesis With T-Amyl Peroxides," presented at the Water-Borne and High-Solids Coatings Symposium on February 5-7, 1986, in New Orleans, Louisiana, disclose low solution viscosity and narrow MWS resins made by polymerizing monomers in a solvent using t-amyl peroxide. Examples of solution prepared resins are also disclosed in patents such as U.S.-A- 2,556,488; 3,673,168; 3,753,958; 3,879,357, and 3,968,059 noted in the above-referenced U.S.-A- 4,414,370.

The polymers useful as the support resin herein, made by bulk or solution processes, include homo- and copolymers of monomers having only one reactive site of ethylenic unsaturation per molecule including 2-hydroxyethyl acrylate, 3-chloro-2-hydroxypropyl acrylate, 2-hydroxybutyl acrylate, 6-hydroxyhexyl acrylate, 2-hydroxymethyl methacrylate, 2-hydroxypropyl methacrylate, 6-hydroxyhexyl methacrylate, 5,6-dihydroxyhexyl methacrylate, methyl methacrylate, ethyl (meth)acrylate, n-propyl (meth)acrylate, n-butyl (meth)acrylate, isopropyl (meth)acrylate, isobutyl (meth)acrylate, n-amyl (meth)acrylate, n-hexyl (meth)acrylate, isoamyl (meth)acrylate, 2-hydroxyethyl (meth)acrylate, 2-hydroxypropyl (meth)acrylate, N,N-dimethyl-aminoethyl (meth)acrylate, N,N-diethylaminoethyl (meth)acrylate, t-butylaminoethyl (meth)acrylate, 2-sulfoethyl (meth)acrylate, trifluoroethyl (meth)acrylate, benzyl (meth)acrylate, 2-n-butoxyethyl (meth)acrylate, 2-chloroethyl (meth)acrylate, sec-butyl (meth)acrylate, tert-butyl (meth)acrylate, 2-ethylbutyl (meth)acrylate, cinnamyl (meth)acrylate, cyclohexyl (meth)acrylate, cyclopentyl (meth)acrylate, 2-ethoxyethyl (meth)acrylate, furfuryl (meth)acrylate, hexafluoroisopropyl (meth)acrylate, 3-methoxybutyl (meth)acrylate, 2-methoxybutyl (meth)acrylate, 2-nitro-2-methylpropyl (meth)acrylate, n-octyl (meth)acrylate, 2-ethylhexyl (meth)acrylate, 2-phenoxyethyl (meth)acrylate, 2-phenylethyl (meth)acrylate, phenyl (meth)acrylate, propargyl (meth)acrylate, tetrahydrofurfuryl (meth)acrylate, tetrahydropyranyl (meth)acrylate, and (meth)acrylic acid. As used herein, "meth" in parentheses before acrylic or acrylate is used to designate either the methacrylic or acrylic compound. Other monomers which can be used in forming the support resin include ethylenic monomers such as vinyl acetate, vinyl pyridine, vinyl pyrollidone, methyl crotonate, maleic anhydride, styrene and alpha-methylstyrene, preferably in combination with an acrylic monomer.

Preferred support resins for use herein are those prepared from a mixture of monomers. It has been found that the support resin preferably will have a glass transition temperature (Tg) within the range of from -40 to 135°C, and an acid value within a range of 50 to 260. Within these ranges it is possible to provide water-dispersible polyurethane/acrylic polymer compositions which are hard resins having a high glass transition temperature or water-dispersible polyurethane/acrylic polymer compositions which are soft resins with a low glass transition temperature, with modification between the extreme ranges.

### The Acrylic Monomers

The acrylic monomers which can be polymerized in the presence of the water-dispersible polyurethane and support resin are as defined in claim 1. Other modifiers which can be used include ethylenically unsaturated monomers such as vinyl acetate and methyl crotonate. It has been found that particularly advantageous water-dispersible polyurethane/acrylic polymer compositions are obtained when the acrylic monomers selected for polymerizing in the presence of the support resin and water-dispersible urethane, when polymerized in the absence of the support resin and water-dispersible polyurethane according to the solution polymer method described in Kamath and Sargent, supra, will provide a Tg value of between -40 to 135°C.

### Polymerization Reaction Of Monomers In Presence Of Water-Dispersible Polyurethane And Support Resin

The reaction of the monomer component in the presence of the water-dispersible polyurethane and support resin is carried out in bulk at temperatures of from 50 to 120°C, and preferably at temperatures of from 75 to 90°C. Alternatively, the polymerisation can be conducted using a continuous monomer feed process at temperatures of from 50 to 120°C, and preferably at temperatures of from 75 to 90°C.

The bulk polymerization process can be conducted substantially similar to the bulk polymerization process defined in the aforementioned commonly assigned U.S.-A-4,414,370; 4,529,787, and 4,546,160. In the bulk polymerization process, the water-dispersible polyurethane dispersed in deionized water, and the support resin are mixed and transferred into a suitable reaction vessel such as a three-neck flask equipped with overhead stirrer, condenser, thermometer, addition funnel, and purged with nitrogen. The acrylic monomers are mixed and added to the reaction vessel. An initiator, such as ammonium persulfate (APS) which can be dissolved in deionized water is conventionally added, and the reaction mixture heated to effect polymerization. The reaction is normally completed within from about one to four hours. It may be desirable to add a second charge of initiator prior to the reaction completion.

In the continuous monomer feed process, the water-dispersible polyurethane, deionized water, and the support resin are mixed and transferred into a suitable reaction vessel such as a three-neck or four-neck flask again equipped with overhead stirrer, condenser, thermometer, addition funnel, and purged with nitrogen. The monomers and initiator are added to the reaction flask, and the reaction continued until the monomers are completely reacted. Again the reaction is normally completed within from about one to four hours. Again it may be desirable to add a second charge of initiator prior to the end of the reaction. In this process it can be advantageous to first charge a small portion of the monomers, i.e., 10% of the total, and then after an initial heating add the remaining monomer content over time.

It is also possible in preparing the urethane-acrylic emulsions of this invention to add the support resin and/or water-dispersible urethane at different stages of the polymerization process. For example, in a first step an acidic emulsion can be made, followed by neutralization to a pH above 7. In a second step the support resin and water-dispersible urethane can be added. In a third step the reactive monomers can be added.

In the alternative processes, an aqueous dispersion of the polymer composition is recovered comprising the polyurethane, the support resin, and acrylic polymer polymerized in situ. As set forth hereinbefore, the physical characteristics of the aqueous dispersion can be modified by judicious selection of the water-dispersible polyurethane, the support resin, and the polymer composition within the ranges set forth above.

### Uses Of The Aqueous Dispersion Of Polyurethane/Support Resin/Polymerized Monomers

The compositions of the present invention are aqueous dispersions having physical characteristics including molecular weight, hardness, and curing characteristics which are controlled based on the selection of the starting polyurethane, support resin and monomer content, as well as on the ratios of components to each other to provide compositions having varying characteristics. If the dispersions are prepared in bulk, they can be used as such without adjustment. If the materials are prepared by a continuous monomer feed process, it may be desirable to adjust the solids content and the like as is conventional in the art. The products can be used in various applications, including as floor polish ingredients, graphic arts inks, plastics, additives, paint binders, adhesives and coatings. The products can be tailored to a particular need, particularly with respect to protective coatings on floors, to obtain the desired hardness, toughness, durability, abrasion and detergent resistance, and gloss characteristics essential to such compositions.

### Possible Additives

In the formulation of the compositions containing the water-dispersible polymer compositions, it is possible to include either during preparation of the water-dispersible composition or as a post-additive a surfactant to provide improved wettability and the like, or a film fortifier such as a natural or synthetic wax, levelling agents, plasticizers and coalescing agents, depending on the ultimate use of the dispersions. A unique characteristic of the water-dispersible polymer compositions of the present invention, however, is that excellent film-forming characteristics of the dispersions can be maximized with minimum amount of additives such as surfactants, levelling agents, plasticizers, or coalescing agents.

### DETAILED DESCRIPTION OF PRESENTLY PREFERRED EMBODIMENTS

Having described the invention in general terms, the following detailed examples are set forth to further illustrate the invention. Parts and percentages are by weight unless otherwise indicated.

### EXAMPLE 1

In this example the water-dispersible polyurethane at 30% by weight solids is a commercially available material marketed by N. L. Industries under the designation Spensol L-51. Spensol L-51 is an anionic aqueous dispersion of the reaction product of isophorone diisocyanate, a low molecular weight polyester polyol, based on polyalkylene glycol, and dimethanol propionic acid. The acrylic support resin which is an acid functional styrene/acrylic resin is manufactured and sold by S. C. Johnson & Son, Inc. under the tradename Joncryl 678. The support resin is made using the bulk polymerization process as described in U.S.-A- 4,546,160. The monomers reacted in the presence of the water-dispersible polyurethane and support resin comprised a mixture of methyl methacrylate and 2-hydroxyethyl methacrylate. The weight percentages are as follows: 47.73% by weight Spensol L-51 as an aqueous dispersion (14.32 non-volatile); 29.68% by weight deionized water; 14.80% by weight of a 20% aqueous dispersion of the support resin (2.96 non-volatile); 6.56% by weight methyl methacrylate monomer (6.56 non-volatile); 1.16% by weight 2-hydroxyethyl methacrylate monomer (1.16 non-volatile); 0.05% by weight ammonium persulfate initiator, and 0.02% by weight t-butyl peroctoate initiator.

### Procedure

(A) All of the components were charged to a four-neck round bottom flask, except for 90% of the monomers and the t-butyl peroctoate. The center neck of the flask is fitted with an agitator, one side neck is fitted with a nitrogen gas inlet, and one side neck is fitted with a thermometer. The final side neck is fitted with an addition funnel. The mixture was heated to 80°C. Thereafter, the remaining 90% of the monomers was added over a period of one to one and one-half hours. After all of the monomer was added, the t-butyl peroctoate was added and the reaction charge held at 80°C for an additional hour. After forced cooling, the resultant dispersion was filtered.
(B) A floor coating composition was prepared based on the polymer dispersion of (A) above comprising 74.12% by weight of the aqueous dispersion; 19.66% by weight water; 1.0% by weight Carbitol; 3.10% by weight Ninate 411 which is a liquid amine aryl sulfonate anionic emulsifier at 92% non-volatile, marketed by Stepan Chemical Company; 0.66% by weight KP-140 which is a tributoxyethyl phosphate plasticizer marketed by the FMC Corporation; and 0.16% by weight BYK-344, a silicone surfactant and levelling agent marketed by BYK Chemie.
(C) The floor composition (B) above when applied to a floor as an air-dry coating had durability, toughness, abrasion and detergent resistance, and hardness superior to a commercial air-dry acrylic floor coating, and had equivalent depth and retention of gloss.

### EXAMPLE 2

A procedure as set forth in Example 1 is repeated except that a soft support resin comprising styrene, methyl methacrylate, butylacrylate and acrylic acid, and having the following characteristics is used:

| | |
|---|---|
| Tg Calc | -23 |
| Acid Number | 110 |
| Number Average Molecular Weight (Mn) | 3030 |
| Weight Average Molecular Weight (Mw) | 9090 |
| Sedimentation Average Molecular Weight (Mz) | 21570 |
| Mz/Mw | 2.37 |
| Mw/Mn | 3.00 |

The weight percentages of the components are as follows: 30.23% by weight polyurethane, Spensol L-51 as an aqueous dispersion (9.07 non-volatile); 41.62% by weight deionized water; 14.83% by weight of a 20% aqueous dispersion of the soft support resin (2.97 non-volatile) as above described; 11.22% by weight methyl methacrylate monomer (11.22 non-volatile); 1.98% by weight 2-hydroxyethyl methacrylate monomer (1.98 non-volatile); and 0.12% by weight ammonium persulfate initiator.

To the emulsion obtained was added 5% of Jonwax 26 which is an emulsified polyethylene wax and a solvent. When used in a non-skid overprint application, the results obtained are as follows:

| 60 Degree Gloss | |
|---|---|
| Black Leneta | 64 |
| White Leneta | 44 |
| White Clay Coat | 45 |

| Slide Angle Degree | |
|---|---|
| Static | 25 |
| Kinetic | 14 |

| Rub Resistance Sutherland w/1.8 Kg (4 lb.) wt. | |
|---|---|
| 200 Cycles | Excellent |
| 400 Cycles | Excellent |
| 600 Cycles | Excellent |
| 800 Cycles | Very Good |
| 1000 Cycles | Very Good |
| Water Resistance | Excellent |

| Block Resistance 60°C/0.3 MPa/16 hours (140°F/40 psi/16 hours) | |
|---|---|
| Dry | Excellent |
| Wet Back | Good |
| Wet Face | Fair |

### EXAMPLE 3

A similar procedure as outlined in Example 1 is used. The weight percentages of components are as follow: 15.77% by weight Spensol L-52 as an aqueous dispersion (4.73 non-volatile); 35.30% by weight deionized water; 17.50% by weight of a 20% aqueous dispersion of the support resin used in Example 1 (3.50 non-volatile); 0.22% by weight of a 30% aqueous solution of the ammonium salt of tridecyl ether sulfate; 0.74% by weight Triton X-100 sold by Rohm & Haas; 10.71% by weight styrene monomer (10.71 non-volatile); 13.39% by weight 2-ethylhexyl acrylate monomer (13.39 non-volatile); 2.68% by weight butyl acrylate monomer (2.68 non-volatile); 0.13% by weight ammonium persulfate initiator; 0.06% by weight t-butyl peroctoate initiator, and 3.50% by weight diethylene glycol ethyl ether.

The above composition as a blisterpack adhesive is drawn down with a #8 RDS rod onto a styrene-butadiene saturated (SBS) stock board. The film had properties as follows:

| | |
|---|---|
| Gloss 60/Degree SBS Stock | 30 |
| Surface Tack | None |

| Block Resistance 102°C/0.03 MPa/24 hours (120°F/4 psi/24 hours) | |
|---|---|
| Face/Back | 2 |
| Face/Face | 0 |

| Seal Conditions | |
|---|---|
| 121°C (250°F)/Hot | 9 |
| 121°C (250°F)/Cold | 7 |
| 135°C (275°F)/Hot | 10 |
| 135°C (275°F)/Cold | 8 |
| 149°C (300°F)/Hot | 10 |
| 149°C (300°F)/Cold | 10 |

Rated from 1-10 (10 = best)

### EXAMPLE 4

A similar procedure as outlined in Example 1 is used. The weight percentages for the emulsion are as follows: 17.52% by weight of Spensol L-51 as an aqueous dispersion (5.26 non-volatile); 23.69% by weight of a 20% aqueous solution of a support resin as used in Example 2 (4.74 non-volatile); 28.68% by weight deionized water; 12.72% by weight styrene monomer (12.72 non-volatile); 12.72% by weight butyl acrylate monomer (12.72 non-volatile); 4.49% by weight 2-hydroxyethyl methacrylate monomer (4.49 non-volatile); and 0.18% by weight of ammonium persulfate initiator.

Exxate 600 which is an acetate ester of hexanol and butyl cellosolve were added to the finished emulsion. Samples were drawn down as a non-pigmented overprint for packaging on black/white and clay coated stock with a #6 RDS rod and dried for ten minutes at 60°C (140°F). The film properties obtained are as follows:

| | | |
|---|---|---|
| Gloss | - Black | 65 |
| | - White | 55 |
| | - Clay Coat | 55 |
| Water Resistance (30 min) | | Excellent |
| Static Slide Angle | | 30° |
| Kinetic Slide Angle | | 27° |

The sample as above prepared was mixed with Jonwax 26 which is an emulsified polyethylene wax and Joncryl 52 which is an aqueous ammonia solution of Joncryl 678 in the proportions listed below. Each sample was drawn down on black/white and clay coated stock with a #6 RDS rod, dried at room temperature overnight, and evaluated as listed below.

| | A | B | C |
|---|---|---|---|
| Example #4 Emulsion | 85 | 75 | 65 |
| Jonwax 26 | 5 | 5 | 5 |
| Joncryl 52 | 10 | 20 | 30 |

| Gloss - 60 Degree | | | |
|---|---|---|---|
| Black | 66 | 69 | 80 |
| White | 43 | 52 | 65 |
| Clay Coat White | 44 | 54 | 65 |

| Slide Angle Degree | | | |
|---|---|---|---|
| Static | 30 | 30 | 37 |
| Kinetic | 17 | 17 | 18 |
| Rub (1000 cycles) | Excellent | Excellent | Excellent |
| Water Resistance <30 Min | Excellent | Excellent | Good |

### EXAMPLE 5

Using a similar procedure as in Example 1, an emulsion was prepared using Spensol DV-4854 and a soft support resin based on styrene, butylacrylate, and acrylic acid. The resin had the following characteristics:

| | |
|---|---|
| Tg Calc | -37 |
| Acid Number | 177 |
| Number Average Molecular Weight (Mn) | 3100 |
| Weight Average Molecular Weight (Mw) | 12700 |
| Sedimentation Average Molecular Weight (Mz) | 41810 |
| Mz/Mw | 3.29 |
| Mw/Mn | 4.10 |

The weight percentages of the components are as follows: 26.47% by weight of an aqueous dispersion of Spensol DV-4854 (8.58 non-volatile); 27.65% by weight deionized water; 17.24% by weight of a 20% aqueous solution of the resin described above (4.74 non-volatile); 2.00% by weight diethylene glycol monoethyl ether; 11.24% by weight of styrene monomer (11.24 non-volatile); 11.24% by weight butyl acrylate monomer (11.24 non-volatile); 3.97% by weight 2-hydroxyethyl methacrylate monomer (3.97 non-volatile), and 0.19% by weight ammonium persulfate initiator.

The above aqueous dispersion is then ground with a white pigment concentrate composed of TiO₂ pigment, resin solution, and water. The mixture is printed onto polypropylene with a flexohand printer and dried for 10 seconds at 65.6°C (150°F).

| Grind Film Properties | |
|---|---|
| Adhesion | Poor |
| Wetting | Good |
| Dry Crinkle | Good |

Other procedures can be used for preparing the urethane/acrylic emulsions whereby the support resin and/or water-dispersible urethane is added at different stages of the polymerization process. This modification can include making an acidic emulsion in the first stage, followed by neutralization to a pH above 7.0. In a second stage, support resin and/or water-dispersible urethane are added. The third stage is the addition of reactive monomers.

### EXAMPLE 6

The following emulsion was prepared:

| | | |
|---|---|---|
| A: | Deionized Water | 253.1 g |
| | Ethoxylated Octylphenol (10 moles ethylene oxide) (Triton X-100) | 2.2 g |
| | Ammonium Salt of Tridecylether Sulfate (30% aqueous solution) | 7.4 g |
| B: | Deionized Water | 15.0 g |
| | Ammonium Persulfate | 1.58 g |
| C: | Methyl Methacrylate | 98.0 g |
| | Styrene | 9.7 g |
| | Butyl Acrylate | 20.8 g |
| | Methacrylic Acid | 10.0 g |
| D: | Spensol L-51 | 197.8 g |
| | Primacor 4983 (ethylene/acrylic acid) (25% solids cut in D.I. water and NH₃) | 237.3 g |
| | Resin described in Example 5 (27.5% aqueous solution) | 70.5 g |
| E: | Methyl Methacrylate | 102.5 g |
| | Styrene | 9.7 g |
| | Butyl Acrylate | 20.8 g |
| | 2-Hydroxyethyl Methacrylate | 5.5 g |

Component A is added to the reaction and heated to 80°C under a nitrogen atmosphere. 10% of weight of component C is added to the reactor and stirred for three minutes. Component B is added and the reaction is held for five minutes. The rest of component C is added over a 35-40 minute period. After holding for ten minutes, ammonium hydroxide (10 g) is added. Component D is added dropwise over 40 minutes. Once half of component D has been charged (20 minutes), component E is added simultaneously over 40 minutes. Once component E is added, the reaction is held at 80°C for 45 minutes, cooled, and filtered.

The emulsion is evaluated in a floor polish formulation similar to Example 1. The formulation has good water and detergent resistance, and a three-coat 60 degree gloss of 67 on vinyl asbestos tiles.

In the above examples the polyurethane can be replaced with other water-dispersible polyurethanes to provide compositions with modified characteristics. The critical feature is that the polyurethane be water-dispersible and be compatible with the support resin and the acrylic polymer which is formed in situ. The support resin utilized in the examples can also be replaced with other support resins so as to provide varying characteristics in the final composition. For example, if a hard, high glass transition temperature resin is desired, the monomers used in forming the support resin can include aromatic content. The hardness or softness of the final composition can be varied by varying the monomers employed in the support resin and/or by varying the amount of support resin utilized. The monomers selected for polymerization in the presence of the water-dispersible and support resin can be changed to provide controlled characteristics to the final polymer dispersions.

Additionally, in the preparation of a floor coating composition based on the aqueous polymer dispersions of this invention, the components of the floor coating composition can be varied whereby the aqueous polymer dispersion will comprise from 40 to 85 weight percent of the composition, based on the aqueous dispersion as prepared, Carbitol will comprise from about 0 to 10 weight percent of the composition, a wax will comprise from about 0 to 10 weight percent of the composition, an emulsifier will comprise from about 0 to 6 weight percent of the composition, and plasticizers and levelling agents will comprise from about 0 to 2.5 weight percent of the composition, with the balance of the composition being water. An important advantage in using the aqueous polymer dispersions of the present invention in a floor coating composition is in the ability to formulate the compositions utilizing only low levels of additives. Compositions falling within the aforesaid ranges will provide air-dried films having excellent gloss, durability, and resistance to spotting.

## Claims

1. A process for preparing an aqueous floor polish characterized by polymerizing acrylic monomers selected from acrylic acid; methacrylic acid; esters of acrylic acid or methacrylic acid, said esters being selected from methyl, ethyl, n-propyl, n-butyl, iso propyl, iso butyl, n-amyl, n-hexyl, iso amyl, sec-butyl, tert butyl, 2-ethyl butyl, cyclohexyl, cyclopentyl, n-octyl, 2-ethyl hexyl, 2-hydroxy ethyl, and 6-hydroxy hexyl; 2-hydroxy-butyl acrylate; 2-hydroxy-propyl methacrylate 5,6-dihydroxyhexyl methacrylate; styrene; alpha methyl styrene; or mixtures thereof to form an in situ polymer in the presence of a water dispersible polyurethane present in the amount of 10 to 65% by weight and a preformed acrylic support resin having an acid number of from 50 to 260 present in an amount of from 5 to 25% by weight, said in situ polymer having a Tg value between -40 and 135°C if produced in the absence of said support resin and water dispersible polyurethane, to produce an aqueous dispersion comprising 40-85% of water dispersible polymer, and thereafter optionally compounding said aqueous dispersion with:
(a) up to 10% by weight wax;
(b) up to 6% by weight surfactant;
(c) up to 2.5% by weight of a plasticizer;
(d) up to 2.5% by weight of a leveling agent; and
(e) a coalescing agent.

2. The process of claim 1 characterized in that said water-dispersible polyurethane is anionic.

3. The process of any of claims 1 or 2 characterized in that the monomers forming the acrylic polymer include unsaturated aromatic monomers, preferably styrene or alpha-methylstyrene.

4. The process of any of claims 1-3 characterized in that said support resin comprises the bulk polymerization reaction product of styrene, alpha-methylstyrene, butylacrylate, methylmethacrylate, and (meth)acrylic acid.

5. The process of any of claims 1-4 characterized in that the acrylic monomers making up said acrylic polymer comprises a mixture of (meth)acrylic acid esters, preferably including a hydroxy(meth)acrylic acid ester.

## Patentansprüche

1. Verfahren zum Herstellen eines wässrigen Fußbodenpflegemittels, gekennzeichnet durch das Polymerisieren von Acrylmonomeren, ausgewählt aus Acrylsäure, Methacrylsäure, Estern von Acrylsäure oder Methacrylsäure, welche Ester ausgewählt werden aus: Methyl-, Ethyl-, n-Propyl-, n-Butyl-, Isopropyl-, Isobutyl-, n-Amyl-, n-Hexyl-, Isoamyl-, *sec*-Butyl-, *tert*-Butyl-, 2-Ethylbutyl-, Cyclohexyl-, Cyclopentyl-, n-Octyl-, 2-Ethylhexyl-, 2-Hydroxyethyl- und 6-Hydroxyhexyl-, 2-Hydroxybutylacrylat; 2-Hydroxypropylmethacrylat, 5,6-Dihydroxyhexylmethacrylat, Styrol, α-Methylstyrol oder deren Mischungen, um ein in situ -Polymer in Gegenwart eines in einer Menge von 10 % ... 65 Gewichtsprozent vorliegenden wasserdispergierbaren Polyurethans und in einer Menge von 5 % ... 25 Gewichtsprozent vorliegenden, als Vorprodukt gebildeten Acryl-Trägerharzes mit einer Säurezahl von 50 ... 260 zu bilden, welches in situ -Polymer einen Tg-Wert zwischen 40 ° und 135 °C hat, wenn es bei Abwesenheit des Trägerharzes und wasserdispergierbaren Polyurethans erzeugt wird, um eine wässrige Dispersion zu erzeugen, umfassend 40 % ... 85 Prozent wasserdispergierbares Polymer, und nachfolgend wahlweises Compoundieren der wässrigen Dispersion mit:
(a) bis zu 10 Gewichtsprozent Wachs;
(b) bis zu 6 Gewichtsprozent Tensid;
(c) bis zu 2,5 Gewichtsprozent eines Weichmachers;
(d) bis zu 2,5 Gewichtsprozent eines Verlaufmittels und
(e) ein Koaleszenzmittel.

2. Verfahren nach Anspruch 1, dadurch gekennzeichnet, daß das wasserdispergierbare Polyurethan anionisch ist.

3. Verfahren nach einem der Ansprüche 1 und 2, dadurch gekennzeichnet, daß die Monomere, welche das Acrylpolymer bilden, ungesättigte aromatische Monomere einschließen, vorzugsweise Styrol oder α-Methylstyrol.

4. Verfahren nach einem der Ansprüche 1 bis 3, dadurch gekennzeichnet, daß das Trägerharz das Reaktionsprodukt der Massepolymerisation von Styrol, α-Methylstyrol, Butylacrylat, Methylmetacrylat und (Meth)acrylsäure umfaßt.

5. Verfahren nach einem der Ansprüche 1 bis 4, dadurch gekennzeichnet, daß die das Acrylpolymer aufbauenden Acrylmonomere eine Mischung von (Meth)acrylsäureestern umfassen, vorzugsweise einschließend einen Hydroxy(meth)acrylsäureester.

## Revendications

1. Procédé de préparation d'une encaustique aqueuse pour parquet, caractérisé par la polymérisation de monomères acryliques choisis parmi l'acide acrylique; l'acide méthacrylique; des esters d'acide acrylique ou d'acide méthacrylique, lesdits esters étant choisis parmi des groupements du type méthyle, éthyle, n-propyle, n-butyle, isopropyle, isobutyle, n-amyle, n-hexyle, isoamyle, sec-butyle, t-butyle, 2-éthylbutyle, cyclohexyle, cyclopentyle, n-octyle, 2-éthylhexyle, 2-hydroxyéthyle et 6-hydroxyhexyle; l'acrylate de 2-hydroxybutyle ; le méthacrylate de 2-hydroxypropyle; le méthacrylate de 5,6-dihydroxyhexyle; le styrène; l'α-méthylstyrène; ou leurs mélanges, pour former un polymère *in situ* en présence d'un polyuréthanne dispersible dans l'eau, présent à raison de 10 à 65 % en masse, et d'une résine support acrylique préformée présentant un indice d'acidité compris entre 50 et 260, présente à raison de 5 à 25 % en masse, ledit polymère *in situ* ayant une valeur de Tg comprise entre -40 et 135°C s'il est produit sans ladite résine support et sans ledit polyuréthanne dispersible dans l'eau, pour produire une dispersion aqueuse comprenant 40 à 85 % de polymère dispersible dans l'eau et, ensuite, par le mélange éventuel de ladite dispersion aqueuse avec :
(a) jusqu'à 10 % en masse de cire,
(b) jusqu'à 6 % en masse de tensioactif,
(c) jusqu'à 2,5 % en masse d'un plastifiant,
(d) jusqu'à 2,5 % en masse d'un agent nivelant et
(e) un agent d'agglutination.

2. Procédé selon la revendication 1, caractérisé en ce que ledit polyuréthanne dispersible dans l'eau est anionique.

3. Procédé selon la revendication 1 ou la revendication 2, caractérisé en ce que les monomères formant le polymère acrylique comprennent des monomères aromatiques insaturés, de préférence le styrène ou l'α-méthylstyrène.

4. Procédé selon l'une quelconque des revendications 1 à 3, caractérisé en ce que ladite résine support comprend le produit de réaction par polymérisation en masse alcaline du styrène, de l'α-méthylstyrène, de l'acrylate de butyle, du méthacrylate de méthyle et de l'acide (méth)acrylique.

5. Procédé selon l'une quelconque des revendications 1 à 4, caractérisé en ce que les monomères acryliques formant ledit polymère acrylique comprennent un mélange d'esters d'acide (méth)acrylique, de préférence y compris un ester d'acide hydroxy(méth)acrylique.
